# EUROPÄISCHE PATENTSCHRIFT

(11) **EP 1 977 021 B1**
(45) Veröffentlichungstag und Bekanntmachung des Hinweises auf die Patenterteilung: **05.03.2014**
(21) Anmeldenummer: 06763680.3
(22) Anmeldetag: 13.06.2006
(51) Int. Cl.: C22C 13/00, C22C 13/02, C22C 21/00, C22C 9/01, C22C 9/02, C22C 9/08

(54) **SN-HALTIGE HOCHBELASTBARE MATERIALZUSAMMENSETZUNG; VERFAHREN ZUR HERSTELLUNG EINER HOCHBELASTBAREN BESCHICHTUNG UND DEREN VERWENDUNG**
SN-CONTAINING HEAVY-DUTY MATERIAL COMPOSITION, METHOD FOR THE PRODUCTION OF A HEAVY-DUTY COATING, AND USE THEREOF
MATIERE A FORTE CAPACITE DE SOLLICITATION CONTENANT DU SN, PROCEDE DE FABRICATION D'UN REVETEMENT A FORTE CAPACITE DE SOLLICITATION ET UTILISATION DUDIT REVETEMENT

(30) Priorität: 13.12.2005 DE 102005059544
(43) Veröffentlichungstag der Anmeldung: 08.10.2008
(73) Patentinhaber: ECKA Granules Germany GmbH, 90762 Fürth (DE)
(72) Erfinder: KORING, Rolf, 41363 Jüchen (DE)
(74) Vertreter: HOFFMANN EITLE
(86) Internationale Anmeldenummer: PCT/EP2006/063159
(87) Internationale Veröffentlichungsnummer: WO 2007/068503

(56) Entgegenhaltungen:
- EP-A- 0 351 462
- EP-A- 0 717 121
- WO-A-01/31074
- WO-A-02/099146
- DD-A1- 220 915
- DE-A1- 10 145 389
- GB-A- 201 562
- GB-A- 231 475
- GB-A- 548 680
- GB-A- 572 484
- GB-A- 740 157
- GB-A- 2 169 616
- JP-A- 2001 159 425
- US-A1- 2002 155 024
- PATENT ABSTRACTS OF JAPAN Bd. 010, Nr. 357 (M-540), 2. Dezember 1986 (1986-12-02) -& JP 61 154790 A (TOSHIBA CORP), 14. Juli 1986 (1986-07-14)
- CLINE H E: "SURFACE RIPPLING INDUCED IN THIN FILMS" METALLURGICAL TRANSACTIONS, METALLURGICAL SOCIETY OF AIME. NEW YORK, US, 26. Februar 1981 (1981-02-26), Seiten 105-114, XP009071238
- DATABASE CA [Online] CHEMICAL ABSTRACTS SERVICE, COLUMBUS, OHIO, US; 1990, IGNAT'EV, M. B. ET AL: "Increasing the wear resistance of steel tribological joints operating in an aqueous medium by laser alloying with tin" XP002398414 gefunden im STN Database accession no. 1990:60359 & VESTNIK MASHINOSTROENIYA , (9), 15-17 CODEN: VMASAV; ISSN: 0042-4633, 1989,

## Beschreibung

Die Erfindung betrifft eine Sn-haltige hochbelastbare Materialzusammensetzung zur Beschichtung von Metallunterlagen; Verfahren zur Herstellung einer Sn-haltigen hochbelastbaren Beschichtung auf Metallunterlagen und die Verwendung der Beschichtung. Hochbelastbare Metall-Beschichtungen werden als Verbund mit metallischen Trägermaterialien hergestellt. Dafür werden spezielle hochbelastbare metallische Werkstoffe verwendet, welche auf die metallischen Trägermaterialien (Stützkörper) aufgebracht werden. Häufig werden hochbelastbare Werkstoffe auf Sn Basis eingesetzt, die gute Gleit-, Einlauf-, Einbett- und Notlaufeigenschaften haben. Falls die Beschichtung thermisch stärker belastet oder die statische und dynamische Belastung der Beschichtung hoch ist, wie bei stoß- und schlagbeanspruchten Lagern, müssen Zusatzelemente eingesetzt werden. Typische Anwendungen sind hochbelastete Lager in Verdichtern, Kolben und Expansionsmaschinen und Walzanlagen.

Nachfolgend wird unter "Metall" sowohl ein einzelnes Metall als auch Metallegierungen als auch Komposite mit einem überwiegenden Metallanteil verstanden. Unter Metallmischungen werden sowohl Pulvermischungen als auch verpresste Pulver oder Komposite verstanden.

Da die Stützkörper der hochbelastbaren Beschichtung zumindest an ihrer Oberfläche aus Metall oder einer Metalllegierung bestehen, muss ein Verbund zwischen dem hochbelastbaren Beschichtungsmaterial und der Stützkörperoberfläche hergestellt werden. Generell können verschiedenste Verfahren zur Herstellung eines Verbundes zwischen metallischen Schichten eingesetzt werden - Standguss-, Schleuderguss, Gießplattieren, Walzplattieren, galvanische Beschichtung, Lötverfahren, Schweissverfahren etc. Dabei ist es wichtig, dass das Material der hochbelastbaren Beschichtung gut auf dem Trägermaterial haftet und möglichst hohe Belastungsfähigkeit aufweist. Zur Beschichtung metallischer Stützkörper werden häufig Sn-haltige Schichten - bspw. Sn-Gußlegierungen nach DIN ISO 4381, UNI 4515, ASTM B23, wie bspw. SnSb12Cu6 oder andere Sn-Legierungen sowie Kupferlegierungen nach DIN ISO438 wie bspw. CuPb20Sn5 oder andere Cu-Legierungen, wie sie dem Fachmann bekannt sind, eingesetzt, oder aber solche auf Aluminium-Basis, wie bspw. AlSn20Cu1.

Bisher mussten zur Sicherung des Metallverbundes zwischen dem Material der hochbelastbaren Beschichtung und dem metallischen Stützkörper enge Grenzen für die Legierungsmetalle des hochbelastbaren Beschichtungswerkstoffs berücksichtigt werden. So ist bisher bei allen bewährten, bleifreien Zinn-Gußlegierungen der Sb-Gehalt auf maximal 14 Gew.% eingeschränkt, der Cu-Gehalt auf maximal 9 Gew.% begrenzt - nur so konnte ein gutes Kristallgefüge, zufriedenstellende Homogenität und insbesondere die erforderliche Bindung (ohne Seigerungen) erzielt werden. Durch diese beim Gussverfahren vorgegebenen Grenzen war einer Werkstoffentwicklung bisher enge Grenzen auferlegt. Als Zinn-Gußlegierung wird eine Werkstoffgruppe bezeichnet, die sich bspw. zum Ausguss von Lagern eignet, die maximal 91 Gew.% Sn und maximal 14% Sb und max. 9% Cu, sowie ggf. geringe Anteile an weiteren Elementen wie z.B. Cd, Zn, Ni, As, Ag, Se, Cr, Bi, In aufweist.

Um die Kristallisation zu verbessern, wurden verfeinernde Elemente, wie As oder Ag zu den Zinnlegierungen zugegeben, wobei As ein Umweltproblem hervorruft und Ag relativ teuer ist. Geeignete Legierungen sind bspw.
SnSb12Cu6Zn0,6Ag0,1.

Ein anderes Material für hochbelastbare Metall-Beschichtungen sind Kupferlegierungen. Sie weisen >50% Cu, bis zu 20 Gew.% Sn, und bis zu 27% Pb auf und zeichnen sich durch gute Beständigkeit in zahlreichen Medien aus. Zwischen Kupferlegierungen und Sn-Gußlegierungen besteht ein Übergangsbereich, denn beide Materialien weisen viele gemeinsame Bestandteile, aber in anderen Mengenverhältnissen auf. Typische Vertreter derartiger Metalle für hochbelastbare Beschichtungen sind CuPb10Sn10, CuPb20Sn5.

Schliesslich werden Sn-haltige Aluminiumlegierungen als hochbelastbare Schichten eingesetzt. So werden bspw. AlSn20, AlSn20Cu, AlSn6Cu zur Herstellung von Lagern verwendet.

JP 2001 159 425 A beispielsweise offenbart Beschichtungswerkstoffe zur Herstellung hochbelastbarer Beschichtungen mit 9% Sb, 6% Cu und Rest Zinn.

Bisher war wegen des Haftproblems eine Vorbehandlung der Bindeoberfläche des metallischen Stützkörpers notwendig, um einen guten Verbund zwischen den metallischen Schichten zu erzielen. Z. B. werden Beizmittel oder eine Verzinnung der Bindeoberfläche Voraussetzung für einen Verbundguss zwischen metallischem Grundkörper, wie Stahl, Stahlguss, Grauguss, Bronze und Sn-haltigen Beschichtungswerkstoffen benötigt, was zu aufwendigen, kostenintensiven und häufig auch umweltbelastenden Verfahrensschritten führt. Bei einigen Verfahren und Werkstoffpaarungen sind zusätzliche metallische Zwischenschichten notwendig, was erheblichen Aufwand mit sich bringt.

Bisher werden derartige Beschichtungen meistens gegossen. Ein Guss derartiger Beschichtungsmaterialien ist aufwendig. Er erfordert eine genaue Temperaturkontrolle und häufig eine Vorbehandlung des Stützmaterials mit meist toxischen Beizen, wie Zink-Chlorid-Verbindungen. Dies setzt ausserdem eine gießfähige Legierung voraus, die ohne Seigerungen oder andere Entmischungsphänomene auf dem Trägermaterial aufbringbar ist. Bei Gussverfahren ist noch dazu eine definierte Erwärmung des Stützkörpers und definierte Kühlung nach dem Ausguss notwendig, um eine gute Qualität des Kristallgefüges, hohe Homogenität und Bindung durch gleichmässige Temperaturführung in beiden Schichten zu erzielen. Nach dem Aufbringen der zinnhaltigen Metallschicht ist sodann eine spanabhebende Nachbehandlung notwendig, um der Beschichtung ihre endgültige Form zu verleihen.

Dies bedeutete beim Stand der Technik das Vorsehen einer Gussanlage und dementsprechender Überwachungs- und Nachbearbeitungseinrichtungen. Bei komplexen Stützkörpern mit stark schwankenden Materialdicken ist es in der Praxis oft schwierig zu bewerkstelligen, eine gleichmäßige zufriedenstellende hochbelastbare Metallschicht aufzugießen. Auch bei andern o. g. Verfahren ist die Einhaltung verschiedener Parameter Voraussetzung für einen guten Verbund und hing bisher stark von den jeweiligen Verarbeitungsbedingungen ab - das Verfahren war schwierig zu normieren.

Ein anderes Verfahren zur Aufbringung insbesondere dünner hochbeanspruchbarer Metallschichten war eine Galvanik Beschichtung zur Herstellung von Mehrschicht Verbundwerkstoffen.

Die dünne Beschichtung kann auch durch Walzplattieren hergestellt werden, auf Basis von Sn-, Al-, Cu-Legierungen hoher Festigkeit und einer Dicke von meistens unter einem Millimeter.

Bei dünnen hochbelastbaren Metallbeschichtungen steigt die Belastbarkeit der Beschichtung - sowohl die Druckfestigkeit als auch die dynamische Belastbarkeit der Beschichtung.

Im Gegensatz zu allen anderen genannten Werkstoffen besitzen die Sn-Gußlegierungen in Kontakt mit einem Gleitpartner gute Notlaufeigenschaften und zeigen ein besonders gutmütiges Verhalten im Schadenfall wobei der Gleitpartner nicht beschädigt wird. Sn-Gußlegierungen sind relativ weich, können Verunreinigungen einbetten. Sie sind bisher wegen der erforderlichen größeren Schichtdicken (Gießverfahren) nicht so hoch belastbar. Kupferlegierungen, die ebenfalls eingesetzt werden, sind relativ hart und führen infolge dessen im Versagensfalle auch zu grossen Schäden am Gleitpartner.

Es ist daher Aufgabe der Erfindung, ein vereinfachtes Verfahren zur Herstellung von Sn-haltigen hochbelastbaren Metall-Beschichtungen zu schaffen.

Die Aufgabe wird erfindungsgemäß durch eine Sn-haltige hochbelastbare Materialzusammensetzung zur Beschichtung von Metallunterlagen nach Anspruch 1 gelöst.

Überraschenderweise ist es nun möglich, dass aufgrund der erfindungsgemäßen neuen Verarbeitungsmethoden diese Materialien, die den herkömmlichen Gußverfahren nicht zugänglich waren, für hochbelastbare Beschichtungen auf metallischen Unterlagen eingesetzt werden können. Da bisher aufgrund der Verfahren ein extrem eingeschränktes Verhalten als gussfähige Legierung notwendig war, konnten diese Zusammensetzungen, die keine zufriedenstellenden Gusseigenschaften haben, nicht für hochbelastbare Beschichtungen verwendet werden und es herrschte die Vorstellung, man könne sie daher nicht einsetzen.

Ferner bezieht sich die Erfindung auch auf Verfahren zur Herstellung einer hochbelastbaren Be-schichtung einer Zusammensetzung nach Anspruch 1, mit: Vorlegen eines Vormaterials dieser Zusammensetzung; Einführen des Vormaterials in eine Laserschweissanlage; Laserschweissen einer oder mehrerer Metallschichten mit der Laserschweissanlage auf eine metallische Unterschicht; sowie ggf. Nacharbeiten der so hergestellten hochbelastbaren Beschichtung sowie die Verwendung der Beschichtung gemäss einem der vorangehenden Ansprüche als hochbelastbare Beschichtung auf Metallunterlagen, Lager.

Durch die Laserschweissverfahren ist es nun möglich, auch schlecht oder nicht gussfähige Material-zusammensetzungen, wie Legierungen oder aber Verbunde - bspw. mit festen Schmierstoffen wie MoS2 oder Graphit - Komposite etc. auf metallische Unterlagen aufzutragen und da keine Gussbedingungen zu berücksichtigen sind, auch ohne aufwändiges Erwärmen der Stützkörper und Abkühlen gearbeitet werden.

Eine sinnvolle Materialzusammensetzung ist eine derartige Sn-reiche hochbelastbare Materialzusammensetzung wobei der Gehalt an Sn 40 - 91 %; Cu 3 - 30 Gew.%; Sb 6 - 30 Gew.% beträgt.

Eine günstige Sn-reiche hochbelastbare Materialzusammensetzung, hat einen Gehalt an Sn 61-83%; Cu 3 - 9%; Sb >14 -30%; Zn 0,1 - 1%.

Eine weitere vorteilhafte Legierungsuntergruppe der Sn-reichen hochbelastbaren Materialzusammensetzungen hat einen der Gehalt an Sn 56 - 85 Gew.%; Cu >9 - 30 Gew.%; Sb 6 - 14%; Zn 0,1 - 1 Gew.%. Alternativ kann auch eine Sn-reiche hochbelastbare Materialzusammensetzung eingesetzt werden mit Sn 40 - 77 Gew.%; Cu >9-30 Gew.%; Sb>14-30 Gew.%; Zn 0,1 - 1 Gew.%.

Typische geeignete Sn-reiche hochbelastbare Materialzusammensetzungen können, sind aber nicht eingeschränkt auf SnSb7Cu7Zn0,8; SnSb7Cu12Zn0,8; SnSb7Cu18Zn0,8; SnSb12Cu6Zn0,8; SnSb12Cu12Zn0,8; SnSb12Cu18Zn0,8

Eine weitere Untergruppe der Sn-Zusammensetzungen sind Cu-reiche; dabei empfehlen sich solche mit einem Gehalt an: Sn 0,6 - 20 Gew.%; Cu 50 - 82 Gew.%; Pb 0 - 27 Gew.%.

Typische Cu-reiche Sn-Zusammensetzungen haben einen Gehalt an Sn 0,6 - 11%; Cu 78 - 82 Gew.%; Pb 9 - 27 Gew.%. Typische Cu-reiche Sn-Zusammensetzungen sind SbSb8Cu4; CuPb10Sn10, CuPb17Sn5, CuPb25Sn4, CuPb24Sn1, auf welche die Cu-reichen Sn-Materialzuammensetzungen gemäss der Erfindung aber keinesfalls eingeschränkt sind.

Es ist günstig, wenn die Sn-haltige hochbelastbare Materialzusammensetzung in Form eines Pulvers, auch eines verdichteten Pulvers, wie eines Pulverpresslings oder reibverschweissten Pulverpresslings vorliegt.

Die Laserschweissanlage ist bevorzugt aus der Gruppe bestehend aus den Pulver- und Draht-Laserschweissanlagen ausgewählt, da diese Verfahren es ermöglichen, einen gleichmässigen Materialauftrag zu erhalten.

Wenn pulverbasierende Ausgangsmaterialien eingesetzt werden, kann aufwändiges Drahtziehen vermieden werden und auch. Beim Einsatz von Pulver entfällt die Notwendigkeit, zunächst einen oder mehrere Drähte herzustellen und es kann kaum oder nicht duktiles Material, wie für Komposite, verarbeitet werden. Somit ist eine Verfahrensvereinfachung gegeben, zumal sich Pulver konstanter zuführen lässt. Allerdings ist Draht leicht zu handhaben und kann in einigen Fällen leichter bevorratet werden. Das Pulver kann aus einer Mischung oder Legierung bestehen.

Der Draht kann aus einem einheitlichen Material bestehen oder aber aus verschiedenen Bestandteilen - bspw. eine Seele aus einem anderen Material aufweisen. Der Draht kann in üblicher Weise gezogen sein, aber auch durch Pulverumform-verfahren, wie das Conform-Verfahren oder Pulverschmieden, ggf. mit Presshilfsmitteln oder Adhäsionshilfen hergestellt sein.

In vielen Fällen, wie dem Fachmann offensichtlich, findet das Laserschweissen unter Schutzgasatmosphäre statt, um unerwünschte Oxidation oder Reaktionen mit anderen Luftbestandteilen, wie Feuchtigkeit, Stickstoff oder CO2, zu vermeiden. Es kann bevorzugt sein, dass aus dem Vormaterial ein Komposit gebildet wird.

Eine typische Schichtdicke der mit den erfindungsgemäßen Sn-haltigen Materialzusammensetzungen aufgebrachten Schichten ist 0,05 bis 3 mm.

Durch die erfindungsgemäß verwendete Laserschweisstechnik ist es möglich, dünnere hochbelastbare Metall-Beschichtungen auf Sn-Basis guter Qualität mit neuen Zusammensetzungen auf metallische Stützkörper aufzubringen, wobei vorteilhafterweise und überraschend jegliche Vorbehandlung der Bindeoberfläche vermieden werden kann. Dadurch kann die bisher bei Gussverfahren notwendige Vorbehandlung mit ökologisch bedenklichen Beizmitteln oder aber auf eine Verzinnung verzichtet werden. Das aufwendige Gussverfahren mit eingeschränkter, ungleichförmiger Qualität kann durch ein einfaches Laserschweissen ersetzt werden. Auch die bisher notwendige Vorwärmung/Kühlung der Werkstoffe bei den Giessverfahren kann nun vermieden werden, die bisher zur Erzielung eines guten Kristallgefüges mit guter Homogenität und Bindung notwendig war. Ferner wird das Ergebnis nicht mehr von der Form des beschichteten Körpers beeinflusst und das Verfahren kann nach wiederholbaren Parametern normierbar durchgeführt werden. Sogar eine Reparatur hochbelastbarer Beschichtungen oder aber eine Neubeschichtung von Metallträgern vor Ort ist mit mobilen Laserschweissgeräten möglich, wobei das Ergebnis nur von den Schweißparametern bestimmt wird.

Beim Einsatz von Laserschweissverfahren werden je nach Bedarf dünne oder dicke Schichten, in jedem Falle homogen und feinkristallin erzielt und somit eine sehr schnelle wirtschaftliche Beschichtung höchster Qualität erreicht.

Überraschenderweise wurde festgestellt, dass die Materialgrenzen des Gussverfahrens, das schmelzfähige Legierungen voraussetzt, beim Laserschweissen nicht mehr gelten. Es können nun Legierungen und Komposite lasergeschweisst werden, die dem Gussverfahren wegen Entmischungsphänomenen und Kristallisationsproblemen nicht zugänglich waren und es kann auch auf Verfeinerungsagentien verzichtet werden, da durch das Aufbringen eine Verfeinerung stattfindet. Bspw. unterliegen die Gehalte an Sb und Cu bei den Sn-Gußlegierungen keinen prozessbedingten Be-schränkungen und kristallfeinende Elemente wie As und Ag sind nicht mehr zwingend erforderlich.

Somit können also Sn-haltige, bleifreie Metallbeschichtungen im wesentlichen bestehend aus den Basiselementen Sn, Sb, Cu
a) mit Sb bis 14 Gew.% und Cu bis 9 Gew.%,
   ggf. mit weiteren Elementen wie z.B. Ni von 0 bis 1 Gew.%, As von 0 bis 1 Gew.%, Ag 0 - 0,2 Gew.%, Cd 0 -1,2 Gew.%, Se 0-0,1 Gew.%, Cr 0-0,2 Gew.%, Bi 0-2 Gew.%, In 0-5 Gew.%, bevorzugt mit Zn 0,1 - 1 Gew.% oder aber auch
b) mit Sb >14 Gew.% und Cu bis 9 Gew.% ,
   ggf. mit weiteren Elementen wie z.B. Ni von 0 bis 1 Gew.%, As von 0 bis 1 Gew.%, Ag 0 - 0,2 Gew.%, Cd 0 -1,2 Gew.%, Se 0-0,1 Gew.%, Cr 0-0,2 Gew.%, Bi 0-2 Gew.%, In 0-5 Gew.%, bevorzugt mit Zn 0,1 - 1 Gew.%
c) mit Sb bis 14 Gew Gew.% und Cu >9 Gew.%,
   ggf. mit weiteren Elementen wie z.B. Ni von 0 bis 1 Gew.%, As von 0 bis 1 Gew.%, Ag 0 - 0,2 Gew.%, Cd 0 -1,2 Gew.%, Se 0-0,1 Gew.%, Cr 0-0,2 Gew.%, Bi 0-2 Gew.%, In 0-5 Gew.%, bevorzugt mit Zn 0,1 - 1 Gew.%
d) mit Sb>14 Gew.% und Cu >9 Gew.%
   ggf. mit weiteren Elementen wie z.B. Ni von 0 bis 1 Gew.%, As von 0 bis 1 Gew.%, Ag 0 - 0,2 Gew.%, Cd 0 -1,2 Gew.%, Se 0 - 0,1 Gew.%, Cr 0 - 0,2 Gew.%, Bi 0 - 2 Gew.%, In 0 - 5 Gew.%, bevorzugt mit Zn 0,1 - 1 Gew.% hergestellt und als Beschichtung verwendet werden.

Aber auch Sn-haltigen Metallbeschichtungen auf Cu-Basis mit Sn-Gehalt bis 20 Gew.% oder auch Sn-haltige Metallbeschichtungen auf AI-Basis mit Sn-Gehalt bis 23 Gew.% können vorteilhaft mit den Laserschweissverfahren besser, einfacher und in meist erheblich besserer Qualität aufgebracht werden. Alle diese Legierungen können ggf. mit weiteren Legierungselemente in geringen Mengen, ggf. Komposite, festen Schmierstoffen, Schweisshilfsstoffen aufweisen

Durch diese Erweiterung des Beschichtungsmaterialspektrums ist eine deutliche Verbesserung der technologischen Eigenschaften der Beschichtungen möglich und eine bisher nicht erkannte Verbesserung der hochbelastbaren Beschichtungen mit Sn-haltigen Werkstoffen realisierbar.

Bisherige Risiken für Inhomogenitäten der Werkstoffe beim Giessen entfallen.

Gemäss den Patenten DE 44 40 477 bzw. EP 0717121 kann bei Weissmetallen durch das Zusatzelement Zn eine Verbesserung der technologischen Daten erzielt werden. Diese Verbesserung bezieht sich nicht nur auf die Druckfestigkeit, sondern auch auf die Kriechfestigkeit. Dies bedeutet, dass Sn-haltige Werkstoffe mit Zn-Zusatz unter hohen Belastungen besonders hohe geometrische Formstabilität besitzen und daher eine hohe Langzeitbeanspruchbarkeit aufweisen - ähnlich dem Spannungs/Dehnungs-Diagramm von Stahl - das Material kriecht weniger - hat also weniger plastische rissfreie Verformung bei erhöhter Temperatur und Druck. Dadurch wird die Lebensdauer verlängert, bspw. kann auch die Lauffläche verringert, bessere Standzeiten und bessere Belastbarkeit, als bei solchen ohne Zn erzielt werden und bspw. bei gleichem technischem Verhalten der Bauraum für das jeweilige Lager stark verkürzt werden.

Da sich praktisch jede Variation der Werkstoffzusammensetzungen als Pulver herstellen und verarbeiten lässt, können alle Werkstoffe auf Sn-, Al- und Cu-Basis verwendet werden, sofern sie sich als hochbelastbare Beschichtungen eignen. Somit können auch Komposite Lasergeschweisst werden, die gegenüber den bekannten Sn-haltigen Beschichtungen stark verbesserte Eigenschaften haben. Beim Pulver kann dieses aus nur einem Material, der Legierung, oder aber aus verschiedenen Bestandteilen bestehen, die eine gewünschte Endzusammensetzung ergeben.

Durch Zusatz von Zn werden die Beschichtungeigenschaften der Sn-haltigen Werkstoffe weiter verbessert - dabei kann längere Lebensdauer erzielt werden. Das Spannungs-Dehnungs-Diagramm der Legierung verändert sich und wird stahlartiger, das Material kriecht weniger (plastische rissfreie Verformung unter Temperatur und Druck). Je weniger ein Material kriecht, um so länger wird die Lebensdauer der entsprechenden hochbelastbaren Beschichtung.

Mit dem Gießverfahren konnten z. B. bei hochbelastbaren Beschichtungen, bleifrei auf Sn-Basis, nur bis 14% Sb und bis 9% Cu eingesetzt werden, bevorzugt 12% Sb, 6% Cu - je mehr Sb und Cu, desto höher belastbar. Durch das neue Verfahren können nun in einfachster Weise Materialzusammensetzungen im Sn/Cu-System verarbeitet werden, die den bisherigen Verfahren nicht zugänglich waren und erheblich bessere Eigenschaften, aufweisen. Dadurch, dass nun auch Komposite verarbeitet werden können, ist es möglich, feste Schmierstoffe in die Lagermetaflschicht einzubringen und so deren Eigenschaften zusätzlich zu verbessern.

Es kann so ein fliessender Übergang zwischen Sn-Gußlegierungen und Kupferlegierungen in Mischungsverhältnissen hergestellt werden, wobei diese Materialien in verschiedensten Anwendungen äusserst vorteilhaft sind.

Nachfolgend wird die Erfindung anhand bevorzugter Beispiele, auf die sie aber keinesfalls eingeschränkt ist, näher erläutert.

### Beispiel 1:

### Aufbringen einer Beschichtung durch Laserschweissen mit Drahtzufuhr

Es wurde eine Laserschweissmaschine mit einer Zufuhr eines Drahtes aus SnSb8Cu4 mit Schutzgas betrieben. Mit diesem Werkstoff wurde ein Stahlträger beschichtet. Es bildete sich eine glatte, gut haftende Schicht einer Dicke von 3 mm aus mehreren Schweisslagen, die nachbearbeitet wurde. Es konnte qualitativ hochwertiger, schneller und weniger aufwendig als durch das an sich übliche Gussverfahren Axial-Lagersegmente für eine Turbine hergestellt werden.

### Beispiel 2

### Aufbringen einer Beschichtung durch Laserschweissen mit Pulverzufuhr

Es wurde eine Laserschweissmaschine mit einem Pulver der Zusammensetzung SnSb12Cu6Zn0,6Ag0,1 mit Schutzgas betrieben. Mit diesem Werkstoff wurde ein Stahlträgermaterial durch Laserschweissen beschichtet. Es bildete sich eine glatte, gut haftende Schicht von 1 mm Es konnte eine Lagerschicht qualitativ hochwertiger, schneller und weniger aufwendig als durch das an sich übliche Gussverfahren hergestellt werden. Dadurch, dass der Schritt der Drahtherstellung umgangen wurde, ist es möglich, auch wenig duktile Materialien, die sich schlecht zu Draht ziehen lassen, als Ausgangsverfahren einzusetzen.

### Beispiel 3

### Aufbringen einer Beschichtung durch Laserschweissen mit Pulverzufuhr

Auf die Beschichtung des Beispiel 2 wurde mit veränderten Schweissparametern eine weitere Schicht im Laserpulverschweissen einer Dicke von 3 mm in einem Arbeitsgang aufgebracht Es konnte qualitativ hochwertiger, schneller und weniger aufwendig als durch das an sich übliche Gussverfahren auch eine dickere Beschichtung hergestellt werden. Dadurch, dass der Schritt der Drahtherstellung umgangen wurde, ist es möglich, auch größere Materialmengen mit gleichmäßiger Geschwindigkeit kontinuierlich zuzuführen.

Obwohl die Erfindung anhand bevorzugter Ausführungsbeispiele beschrieben wurde, ist dem Fachmann offensichtlich, dass verschiedenste alternative Ausführungsformen bestehen, so dass der Schutzumfang der Erfindung durch die Ansprüche und nicht durch die spezielle Beschreibung begrenzt ist.

## Patentansprüche

1. Verwendung einer Zusammensetzung, die besteht aus (i) den Basiselementen Sn, Cu und Sb und (ii) weiteren Bestandteilen, in Anteilen (Gew.-%) von:
(i)
61 à 83 % Sn,
3 à 9 % Cu, und
> 14 à 30 % Sb; oder
56 à 85 % Sn,
> 9 à 30 % Cu, und
6 à 14 % Sb; oder
40 à 77 % Sn,
> 9 à 30 % Cu, und
> 14 à 30 % Sb; und
(ii)
0,1 à 1 % Zn,
0 à 1 % Ni,
0 à 1 % As,
0 à 0,2 % Ag,
0 à 1,2 % Cd,
0 à 0, 1 % Se,
0 à 0,2 % Cr,
0 à 2 % Bi, und
0 à 5 % In;
und gegebenenfalls Hartstoffen, festen Schmierstoffen, Schweißhilfsstoffen, zur Herstellung einer hochbelastbaren Beschichtung auf Metallunterlagen mittels Laserschweißen.

2. Verwendung nach Anspruch 1, worin die Zusammensetzung ausgewählt ist aus SnSb7Cu7Zn0,8; SnSb7Cul2Zn0,8; SnSb7Cu18Zn0,8; SnSb12Cu6Zn0,8; SnSb12Cu12Zn0,8 und SnSb12Cu18Zn0,8.

3. Verwendung nach Anspruch 1 oder 2, **dadurch gekennzeichnet, dass** die Zusammensetzung in Form eines Pulvers oder eines verdichteten Pulvers vorliegt.

4. Zusammensetzung, die eine Sn-reiche hochbelastbare Materialzusammensetzung zur Beschichtung von Metallunterlagen ist, ausgewählt aus SnSb7Cu7Zn0,8; SnSb7Cu12Zn0,8; SnSb7Cu18Zn0,8; SnSb12Cu6Zn0,8; SnSb12Cu12Zn0,8 und SnSb12Cu18Zn0,8.

5. Zusammensetzung nach Anspruch 4, **dadurch gekennzeichnet, dass** sie in Form eines Pulvers oder eines verdichteten Pulvers vorliegt.

6. Verfahren zur Herstellung einer hochbelastbaren Beschichtung, umfassend
(i) Einführen einer Zusammensetzung wie in mindestens einem der Ansprüche 1-5 definiert in eine Laserschweißanlage;
(ii) Laserschweißen einer oder mehrerer Metallschichten mit der Laserschweißanlage auf eine metallische Unterschicht; und
(iii) gegebenenfalls Nacharbeiten der so hergestellten hochbelastbaren Beschichtung.

7. Verfahren nach Anspruch 6, **dadurch gekennzeichnet, dass** die Laserschweißanlage ausgewählt ist aus Laserpulver- und Laserdrahtschweißanlagen.

8. Verfahren nach Anspruch 6 oder 7, **dadurch gekennzeichnet, dass** das Laserschweißen unter Schutzgasatmosphäre stattfindet.

9. Verfahren nach mindestens einem der Ansprüche 6-8, **dadurch gekennzeichnet, dass** eine Schichtdicke von 0,05-3 mm aufgebracht wird.

10. Hochbelastbare Beschichtung, erhältlich nach dem Verfahren nach mindestens einem der Ansprüche 6-9.

## Claims

1. Use of a composition which consists of (i) the basic elements Sn, Cu and Sb and (ii) further components, in proportions (weight %) of:
(i)
61 à 83 % Sn,
3 à 9 % Cu, and
> 14 à 30 % Sb; or
56 à 85 % Sn,
> 9 à 30 % Cu, and
6 à 14 % Sb; or
40 à 77 % Sn,
> 9 à 30 % Cu, and
> 14 à 30 % Sb; and
(ii)
0,1 à 1 % Zn,
0 à 1 % Ni,
0 à 1 % As,
0 à 0,2 % Ag,
0 à 1,2 % Cd,
0 à 0, 1 % Se,
0 à 0,2 % Cr,
0 à 2 % Bi, and
0 à 5 % In;
and if occasion arises hard materials, solid lubricants and welding auxiliary materials, to produce a highly durable coating on metal substrates by laser welding.

2. Use according to claim 1, in which the composition is selected from SnSb7Cu7Zn0.8; SnSb7Cu12Zn0.8; SnSb7Cu18Zn0.8; SnSb12Cu6Zn0.8; SnSb12Cu12Zn0.8 and SnSb12Cu18Zn0.8.

3. Use according to claim 1 or 2, **characterised in that** the composition is in the form of a powder or a compacted powder.

4. Composition which is a Sn-rich highly durable composition for coating metal substrates, selected from SnSb7Cu7Zn0.8; SnSb7Cu12Zn0.8; SnSb7Cu18Zn0.8; SnSb12Cu6Zn0.8; SnSb12Cu12Zn0.8 and SnSb12Cu18Zn0.8.

5. Composition according to claim 4, **characterised in that** it is in the form of a powder or a compacted powder.

6. Method for the production of a highly durable coating, comprising
(i) introducing a composition as defined in one or more of claims 1-5 into a laser welding apparatus;
(ii) laser welding one or more metal layers with the laser welding apparatus to a lower metal layer; and
(iii) if occasion arises reworking the highly durable coating produced in this way.

7. Method according to claim 6, **characterised in that** the laser welding apparatus is selected from laser powder and laser wire welding apparatuses.

8. Method according to claim 6 or 7, **characterised in that** laser welding takes place in an inert gas atmosphere.

9. Method according to one or more of claims 6-8, **characterised in that** a layer thickness of 0.05-3 mm is applied.

10. Highly durable coating, obtainable by the method according to one or more of claims 6-9.

## Revendications

1. Utilisation d'une composition qui est constituée (i) des éléments de base Sn, Cu et Sb et (ii) d'autres composants, en proportions (% en poids) de :
(i)
61 à 83 % de Sn,
3 à 9 % de Cu, et
> 14 à 30 % de Sb ; ou
56 à 85 % de Sn,
> 9 à 30 % de Cu, et
6 à 14 % de Sb ; ou
40 à 77 % de Sn,
> 9 à 30 % de Cu, et
> 14 à 30 % de Sb ; et
(ii)
0,1 à 1 % de Zn,
0 à 1 % de Ni,
0 à 1 % de As,
0 à 0,2 % de Ag,
0 à 1,2 % de Cd,
0 à 0, 1 % de Se,
0 à 0,2 % de Cr,
0 à 2 % de Bi, et
0 à 5 % de In ;
et le cas échéant de substances dures, lubrifiants solides, auxiliaires de soudage, pour la fabrication d'un revêtement à forte capacité de sollicitation sur des substrats métalliques au moyen du soudage laser.

2. Utilisation selon la revendication 1, dans laquelle la composition est choisie parmi SnSb7Cu7Zn0,8 ; SnSb7Cu12Zn0,8 ; SnSb7Cu18Zn0,8 ; SnSb12Cu6Zn0,8 ; SnSb12Cu12Zn0,8 et SnSb12Cu18Zn0,8.

3. Utilisation selon la revendication 1 ou 2, **caractérisée en ce que** la composition se présente sous la forme d'une poudre ou d'une poudre comprimée.

4. Composition qui est une composition de matière à forte capacité de sollicitation, riche en Sn pour le revêtement de substrats métalliques, choisie parmi SnSb7Cu7Zn0,8 ; SnSb7Cu12Zn0,8 ; SnSb7Cu18Zn0,8 ; SnSb12Cu6Zn0,8 ; SnSb12Cu12Zn0,8 et SnSb12Cu18Zn0,8.

5. Composition selon la revendication 4, **caractérisée en ce qu'**elle se présente sous la forme d'une poudre ou d'une poudre comprimée.

6. Procédé de fabrication d'un revêtement à forte capacité de sollicitation, comprenant
(i) l'introduction d'une composition telle que définie dans au moins une des revendications 1 à 5 dans une installation de soudage au laser ;
(ii) le soudage au laser d'une ou de plusieurs couches métalliques sur un substrat métallique avec l'installation de soudage au laser ; et
(iii) le cas échéant le retraitement du revêtement à forte capacité de sollicitation ainsi fabriqué.

7. Procédé selon la revendication 6, **caractérisé en ce que** l'installation de soudage au laser est choisie parmi les installations de soudage de poudres au laser et de fils au laser.

8. Procédé selon la revendication 6 ou 7, **caractérisé en ce que** le soudage au laser s'effectue sous atmosphère de gaz protectrice.

9. Procédé selon au moins l'une des revendications 6 à 8, **caractérisé en ce qu'**une épaisseur de couche de 0,05 à 3 mm est déposée.

10. Revêtement à forte capacité de sollicitation, pouvant être obtenu d'après le procédé selon au moins l'une des revendications 6 à 9.
